# EUROPEAN PATENT APPLICATION

(11) **EP 1 830 310 A1**
(43) Date of publication of application: **05.09.2007**
(21) Application number: 05795543.7
(22) Date of filing: 19.10.2005
(51) Int. Cl.: G06K 19/07

(54) **DEVICE FOR STORING SECRET INFORMATION USING POSTURE OR MOTION OF OBJECT AS SECRET KEY**

(30) Priority: 19.10.2004 JP 2004303912
(71) Applicant: Intellectual Property Bank Corp., 1-21-19, Toranomon, Minato-ku Tokyo 1050001 (JP)
(72) Inventor: MARUI, Tomohiro, Minato-ku, Tokyo 1050001 (JP); KUROSAWA, Nobuyoshi, Minato-ku, Tokyo 1050001 (JP)
(74) Representative: Grünecker, Kinkeldey, Stockmair & Schwanhäusser Anwaltssozietät
(86) International application number: PCT/JP2005/019198
(87) International publication number: WO 2006/043589

(57) **Abstract**

A device to which an electronic tag with a sensor is applied. The sensor is a posture sensor or a motion sensor using acceleration, and the application field is to store secret information and reference it as necessary. Especially the device is used when information is shared by persons. Information can be, for example, a message not going public to the secret sharers. Two or more objects (M) each have a posture sensor and means for transmitting the posture sensor output to a remote place. A separate station (N) has receiving means for receiving a remote transmission signal of the posture sensor output, first storage means for storing as a secret key a data set containing two or more combinations of the posture sensor output range data on the objects (M), second storage means for storing secret information in accordance with the secret key, and means for outputting secret information stored in the second storage means in accordance with the secret key when the combination of the posture sensor output data received by the receiving means agrees with the secret key.

## Description

### Technical Field

The present invention relates to a technique applying an electronic tag with a sensor, the sensor is an attitude sensor or a motion sensor by acceleration, and the field of application is a technique for storing secret information and referring to the secret information if necessary. This technique is used particularly when information is shared by a plurality of persons. The secret information includes, for example, a testament shared between husband and wife/parent and child with blood relationship, a promise shared between lovers. This may be information that is not disclosed even to the sharer of a secret up until a particular time, such as, in particular, a testament.

Here, the electronic tag means a tag having a built-in IC chip and antenna, and by storing therein unique identification information or the like and reading and writing the identification information or the like via radio waves, it is possible to provide an "automatic recognition system." Usage of radio waves allows non-contact reading and writing and simultaneously reading information of a plurality of tags. The electronic tag, an IC tag, a radio electronic tag, a radio IC tag, an RF (Radio Frequency) tag, etc., are all the same. There are distance limitations to a remote information transmission by an electronic tag. However, the limitations can be used in a reverse manner in the present invention. That is, it is also possible to add the fact as a condition for a secret key that secret information sharers are close/approximate to each other, which is effective.

### Background Art

Electronic tags mainly have the following features, such as being capable of transmitting data, operating even without a battery, it is also possible to embed a thin and small type in an object, a large variety of types exist from a low-price product with only an ID readout function to a highly-functional product cable of reading and writing information, and the like. It is expected that electronic tags will have a wide range of applications by taking advantage of their excellent features and a wide variety of electronic tags have been put into practical use according to their application scenarios and purposes thereof. There are some forms, such as one written with only ID information, one having an information writable memory area, one that requires a power supply, and one that requires no power supply. For example, a noncontact IC card represented by "Suica (trademark)" of East Japan Railway Company (JR East) is also a form of electronic tag.

The information receiving/transmitting apparatus described in Patent Document 8 that has been applied by the inventor is also a form of electronic tag, and is an applied technology of an electronic tag with a sensor. Patent Document 8 provides a communications apparatus that remotely transmits fixed information defined by a user, which is an extremely simple communications tool using an obj ect taking a plurality of static attitudes disposed with a three-axis attitude sensor (three-axis acceleration sensor). Hereinafter, Patent Document 8 being one of the background arts of the present invention will be described.

As examples of the fixed information, fixed information as to whether a branch of a financial institution or the like or a solitary elderly person is in an emergency, fixed information on the whereabouts of an office worker such as in attendance, in a meeting, returned home, fixed menu order information in a restaurant, numbers on a dice of sugoroku can be mentioned. Patent Document 8 provides a simple communications apparatus using, as a transmission tool, a handy and familiar object producing a sense of affinity such as a rectangular parallelepiped or a sphere as well as an object excellent in design.

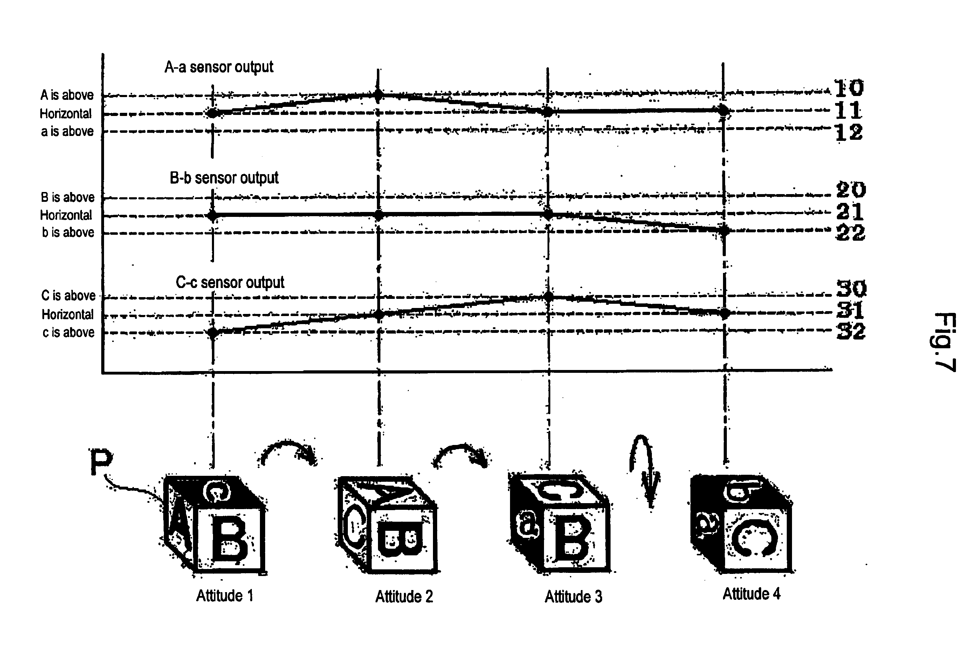

A known three-axis acceleration sensor (three-axis attitude sensor) will be described in Fig. 7. A three-axis attitude sensor P is a combination of three elements each of which detects a mechanical deflection of a part of a disposition. That is, an element to detect a deflection is fixed in directions of an A-a axis, a B-b axis, and a C-c axis schematically shown by regular hexahedrons of Fig. 7 or to a surface spread by each axis. Those elements detect a mechanical deflection in each direction. Even if respective deflection detecting axes are not always orthogonal to each other, a three dimensional attitude and a three-dimensional acceleration are determined by a linear conversion of axial direction information as long as these are not parallel to each other (see Patent Document 6 etc).

The element to detect a deflection is a material having a piezoelectric effect, and produces an electrical signal according to a mechanical deflection. By disposing three such piezoelectric elements on three nonparallel axes, a three-dimensional attitude can be distinguished based on outputs of those elements. That is, different deflection outputs are obtained in different attitudes, such as with regard to an attitude 1 of Fig. 7, an output of the A-a axis deflection detecting element is 11, an output of the B-b axis deflection detecting element is 21, and an output of the C-c axis deflection detecting element is 32 (this is abbreviated to (11, 21, 32), with regard to an attitude 2, (10, 21, 31), with regard to an attitude 3, (11, 21, 30), and with regard to an attitude 4, (11, 22, 31). The attitudes 1, 2, 3, and 4 can be distinguished based on these outputs. It is also possible to detect acceleration in the same manner as deflection. Description thereof will be omitted.

A three-dimensional attitude/three-dimensional acceleration sensor is known, and includes, for example, a "piezoresistive-type triaxial accelerating sensor*"* by Hitachi Metals, Ltd. This is formed by three-dimensionally incorporating three elements into an ultra-compact/ultra-slim IC chip by an MEMS (micromachine) technology as an analog sensor package.

It is known to dispose a three-dimensional attitude/three-dimensional acceleration sensor on a movable object such as an automobile or a train and detect/analyze an attitude/motion (acceleration) of the movable object. The purpose of the detection/analysis is control,accident prevention of the movable object, or the like (see Patent Document 1). Although being a usage similar to this, it is also known to dispose a three-dimensional attitude/three-dimensional acceleration sensor on a door or a window and detect an attitude/motion (acceleration) thereof for usage as a burglarproof sensor (see Patent Document 5).

It is also known to mount a three-dimensional attitude/three-dimensional acceleration sensor on a living body to detect and analyze an attitude (acceleration) thereof (see Patent Document 1 and Patent Document 2). Such a detection/analysis is for the purpose of healthcare, disease prediction, an improvement/training of exercise motion such as rehabilitation and an athletic training, or confirmation of safety of a solitary elderly person. In this case, a vital sensor to detect a body temperature, a heartbeat, a pulse wave, breath, etc., may also be mounted on the living body. On the other hand, for convenience of orders and rationalization of order management as one of the technical applications of Patent Document 8, there are examples of a remote communications technology using a portable terminal (see Patent Documents 3 and 4) .

Meanwhile, the technology of Patent Document 8 has a similar part to the devices that "softly transmit information" described in Patent Documents 9 and 10 (Fig. 5: see an explanatory view of the devices of Patent Documents 9 and 10). However, Patent Document 8 is completely different from Patent Documents 9 and 10 in the quality of transmitting information. That is, as shown in Fig. 6, Patent Document 8 is for transmitting "fixed information" having no relation to an attitude or acceleration to an isolated station, while Patent Documents 9 and 10 are for softly transmitting "sensor detection information detected in real time" including an attitude and acceleration. Therefore, it can be said that Patent Document 8 and Patent Documents 9 and 10 are different types of technologies although there are similarities in hardware configurations. Moreover, in Patent Documents 9 and 10, the information outputting means is limited to one that emits light (one having a light output).

Patent Document 7 is a technique applying an electronic tag with an attitude/acceleration sensor to assembly of a structure. This is cited as a reference although the purpose of use is apparently different. On the other hand, the present invention is, as a hardware configuration, a multiplexed configuration by combination of a plurality of configurations of Patent Document 8, and is a technique dealing with secret information as information, storing the secret information, and referring to the secret information if necessary. This is used particularly when information is shared by a plurality of persons. There is a similar part to Patent Document 11 in terms of using an attitude/motion as a secret key. Patent Document 11 is a technique for conductingpersonal authentication when using a personally owned device (portable terminal) byanattitudeormotion. However, the present invention is for protecting secret information from leakage by a combination key of a plurality of attitudes/motions. Therefore the present invention is different from the simple personal authentication technique in the method and purpose.
Patent Document 1: Japanese Published Unexamined Patent Application No. H10-113343 "METHOD, DEVICE AND SYSTEM FOR RECOGNIZINGACTION AND BEHAVIOR*"* Hitachi, Ltd.
Patent Document 2: Japanese Published Unexamined Patent Application No. 2004-096630 "LIFE CONDITION AND ENVIRONMENT EXPRESSION APPARATUS, EXPRESSION APPARATUS AND LIFE CONDITION AND ENVIRONMENT EXPRESSION METHOD" Sekisui Chemical Co., Ltd.
Patent Document 3: Japanese Patent No. 2869720 "ORDER MANAGEMENT SYSTEM IN RESTAURANT" NITSUKO Corporation
Patent Document 4: Japanese Published Unexamined Patent Application No. 2002-219044 "FOOD AND DRINK ORDERING APPARATUS IN RESTAURANT" KURA CORPORATION
Patent Document 5: Japanese Published Unexamined Patent Application No. H11-316881 "BURGLARPROOF SENSOR" OMRON Corporation
Patent Document 6: Japanese Published Unexamined Patent Application No. H09-005104 "METHOD AND APPARATUS FOR MEASUREMENT OF THREE-DIMENSIONAL ATTITUDE ANGLE OFMOVING BODY" NIPPON TELEGRAPH AND TELEPHONE CORPORATION
Patent Document 7: Japanese Patent Application No. 2004-300841 "STRUCTURE ASSEMBLING METHOD USING ELECTRONIC TAG WITH ATTITUDE SENSOR AND STRUCTURE ASSEMBLING APPARATUS, AND DATA STORAGE FOR MAINTAINING STRUCTURE" Intellectual Property Bank Corp. (PCT/JP2005/19011)
Patent Document 8: Japanese Patent Application No. 2004-247996 "APPARATUS FOR COMMUNICATING STEREOTYPE INFORMATION RELATED TO ATTITUDE OF OBJECT" Intellectual Property Bank Corp. et al. (PCT/JP2005/015641)
Patent Document 9: Japanese Published Unexamined Patent Application No. 2003-256938 "LIGHT OUTPUT DEVICE AND INFORMATION PROCESSING TERMINAL" Matsushita Electric Industrial Co., Ltd.
Patent Document 10: Japanese Published Unexamined Patent Application No. 2003-263146 "LIGHT OUTPUT DEVICE AND REPEATER" Matsushita Electric Industrial Co., Ltd.
Patent Document 11: Japanese Published Unexamined Patent Application No. 2002-291047 "PORTABLE COMMUNICATION TERMINAL PROVIDED WITH ACCELERATION DETECTION MEANS" NEC Corporation

### Disclosure of the Invention

### Problems to be Solved by the Invention

It is an object of the present invention to provide a technique for storing secret information such as a project plan, a financial plan, a business plan, and details of a confidential agreement shared between an investor and an entrepreneur or between a manager and employee, and for example, a testament, a promise, etc., shared between husband and wife/parent and child with blood relationship, and lovers and referring to the secret information if necessary. The secret information may be information that is not disclosed even to the sharer of a secret up until a particular time, such as, in particular, the example of a testament. As a special example, there may be a case where a (nonhuman) animal and its owner share a secret. In that case, the animal has an attitude/motion secret key, and the same applies although the animal does not recognize the secret itself. There is also an example such as a racehorse and its jockey. In addition, the sharers may not always necessarily be living creatures, but may be a movable object such as an automobile and its driver. These examples will be described later.

### Means for Solving the Problems

The present invention is, as a hardware configuration, a multiplexed configuration by combination of a plurality of configurations of Patent Document 8, however, has clarified a secreting (encoding) method while clearly expressing dealing with secret information. That is, the present invention provides (Claim 1) a device for storing secret information in a station N isolated from an object M using an attitude of the object M as a secret key, wherein two or more objects M each include an attitude sensor and a means that remotely transmits output of the attitude sensor, and the isolated station N includes: a receiving means for a remotely transmitted signal of the attitude sensor output; a first storage means that stores a data set of two or more combinations of attitude sensor output range data of the two or more objects M as a secret key; a second storage means that stores secret information in a manner corresponding to the secret key; and a means that outputs the secret information of the second storage means stored in a manner corresponding to the secret key and/or a means that transmits the secret information of the second storage means stored in a manner corresponding to the secret key when a combination of attitude sensor output data received by the receiving means from the two or more objects M matches the secret key.

Although this is almost synonymous with the above (Claim 1), a time pattern of acceleration changes by an acceleration sensor may be recorded to use a series of acceleration sensor output pattern data indicating a series of motions as a secret key. The series of motions is such as to, for example, "invert," "incline," and "shake once," for which characteristics of a series of motions of a user are quantified as a series of time-series data of the acceleration sensor so that the motions can be distinguished from motions of the others and used as a secret key. That is, the configuration may be such that (Claim 2) two or more objects M each include an acceleration sensor and a means that remotely transmits output of the acceleration sensor, and the isolated station N includes: a receiving means for a remotely transmitted signal of the acceleration sensor output; a first storage means that stores a data set of two or more combinations of series of acceleration sensor output pattern data of the two or more objects M as a secret key; a second storage means that stores secret information in a manner corresponding to the secret key; and a means that outputs the secret information of the second storage means stored in a manner corresponding to the secret key and/or a means that transmits the secret information of the second storage means stored in a manner corresponding to the secret key when a combinationof series of acceleration sensor output pattern data received by the receiving means from the two or more objects M matches the secret key. Here, the "pattern data" is synonymous with time-series data. The object M of the present invention can also be called a "dynamic secret key" whose secret is canceled by attitude or motion.

In addition, similar to Patent Document 8, the object M may be provided with not only a transmitting means but also a means that receives secondary information obtained from secret information. The secondary information will be explained later. In this case, the present invention provides (Claim 3) a device for bidirectionally communicating secret information using an attitude or motion of an obj ectM that takes a plurality of attitudes as a secret key and secondary information obtained from the secret information, wherein two or more objects M each include an attitude or acceleration sensor and a means that remotely transmits output of the attitude or acceleration sensor, the isolated station N includes: a receiving means for a remotely transmitted signal of the attitude or acceleration sensor output; a first storage means that stores a data set of two or more combinations of attitude sensor output range data of the two or more objects M or a data set of two or more combinations of series of acceleration sensor output pattern data of the two or more objects M as a secret key; a second storage means that stores secret information in a manner corresponding to the secret key; and a means that outputs the secret information of the second storage means stored in a manner corresponding to the secret key and/or a means that transmits the secret information of the second storage means stored in a manner corresponding to the secret key when a combination of attitude sensor output data received by the receiving means from the two or more objects M matches the secret key or when a combination of series of acceleration sensor output pattern data received by the receiving means from the two or more objects M matches the secret key, the isolated station N further includes a means that obtains secondary information, when the isolated station N outputs and/or transmits secret information upon matching of the secret key, based on the secret information and a means that remotely transmits the secondary information, and the object M further includes a receiving means that receives a remotely transmitted signal of the secondary information and an output means for the secondary information.

In addition, (Claim 4) similar to Patent Document 8, it may be possible that the secret information is also related to a character described on a surface, a graphic drawn on the surface, or a color applied to the surface that can be visually perceived at the sight of the surface of the object M. In addition, (Claim 5) similar to Patent Document 8, it may be possible the secret information is also related to a surface unevenness or a sense of touch of a surface that can be tactually perceived by touching the surface of the object M. However, the "relation" in Claim 4 and Claim 5 is not a "relation" suspected by a third party (others) having no relation to the secret information. The "relation" is a secret relation that can be understood by only users of the present invention sharing a secret, and offers convenience only to the users so that the users can recognize the object M as a "dynamic secret key."

In terms of the object M and its attitude/motion, (Claim 6) the object M is a solidbody apart of whose surface canbe visuallydistinguished as a partial surface from the other part of the surface, and one of the attitudes of the object M is an attitude of the object M statically placed with the partial surface located at an uppermost portion of the solid body or a lowermost portion of the solid body, one of the motions of the object M is a motion to change the partial surface from the attitude of the object M statically placed with the partial surface located at an uppermost portion of the solid body or a lowermost portion of the solid body into another attitude, or one of the motions of the object M is a motion to change the partial surface from an attitude different from the attitude of the object M not statically placed with the partial surface located at an uppermost portion of the solid body or a lowermost portion of the solid body into the attitude of the object M statically placed with the partial surface located at an uppermost portion of the solid body or a lowermost portion of the solid body.

In terms of the secret information and possession of the object M, it is preferable that (Claim 7) the secret information is shared by two or more secret information sharers, the secret information sharers each possessing a different object M. However, the secret information can be secret information of a single person, and in particular, as described before, there may be a case where an animal owner has secret information of a single person. In the case of information of a single person, it is preferable that the single person possesses a plurality of objects M, however, the single person may possess one object M and use a series of time-varying attitudes/motions as a secret key.

### Effects of the Invention

By the present intention, a device that stores secret information such as a project plan, a financial plan, a business plan, and details of a confidential agreement shared between an investor and an entrepreneur or between a manager and employee, and for example, a testament, a promise, etc., shared between husband and wife/parent and child with blood relationship, and lovers and refers to the secret information if necessary can be obtained. The secret information may be information that is not disclosed even to the sharer of a secret up until a particular time, such as, in particular, the example of a testament. As a special example, there may be a case where a (nonhuman) animal and its owner share a secret, and in that case, the animal and owner have attitude/motion secret keys. In addition, as another special example, there may be a working mode wherein no human is involved, such that objects M disposed on both of a manipulator and an actuator manipulated by said manipulator are used.

In the present invention, since it is also possible to quantify characteristics of a series of motions (motion habits that cannot be imitated by others) of a user as a series of time-series data of the acceleration sensor so that the motions can be distinguished frommotions of others and use the data as a secret key, the degree of confidentiality is considerably high, so that an effect to eradicate leakage of a secret can be obtained.

Moreover, as another advantage of the present invention, by using the limits (limitations) to a remote communication, which is a drawback of an electronic tag, in a reverse manner, a condition that secret sharers are present in proximity on-site for a cancellation of a secret key can be considerably simply realized. That is, by using radio waves that reach only a few meters, the limit (limitation) distance in a remote communication can be conditioned so that a secret key cannot be canceled unless the objects M are present on-site in proximity to each other. Thereby, an effect is obtained, such that even when a person having only one of the objects M attempts to cancel the secret key, there is a great degree of difficulty and the shared secret has a high level of confidentiality.

### Brief Description of the Drawings

[Fig. 1] Explanatory views (two transmitting sources: objects M) of a device configuration of a first embodiment (reception-only mode) of the present invention.
[Fig. 2] Explanatory views of another configuration (three or more transmitting sources: objects M) of the first embodiment (reception-only mode) of the present invention.
[Fig. 3] Explanatory views of a device configuration of a second embodiment (transmittable/receivable) of the present invention.
[Fig. 4] Explanatory views of another configuration (three or more transmitting sources exist) of the second embodiment (transmittable/receivable) of the present invention.

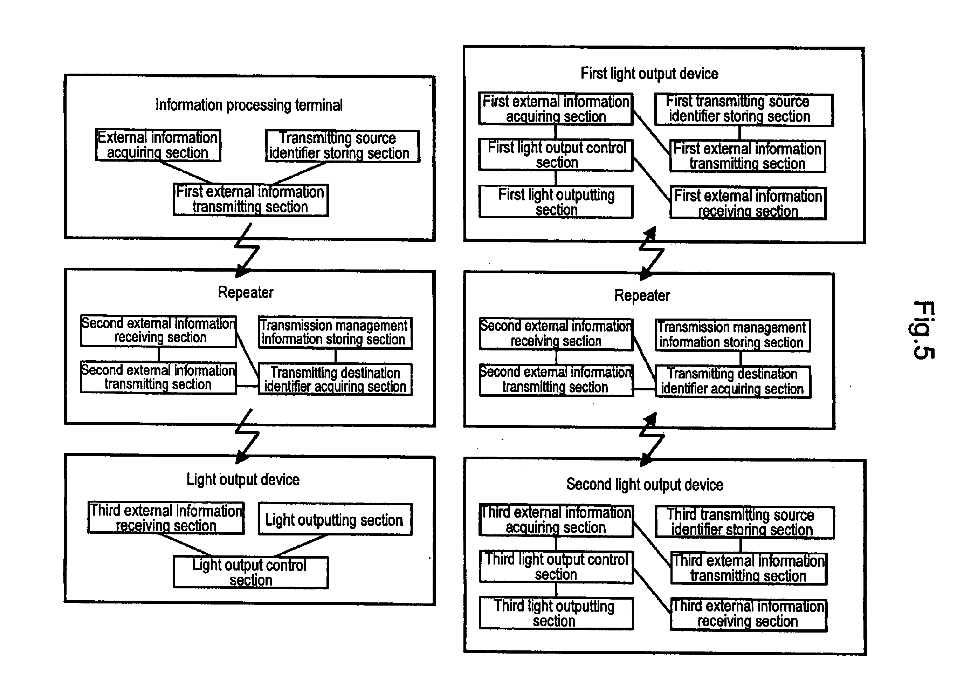

[Fig. 5] Explanatory views of the devices of Patent Documents 9 and 10.

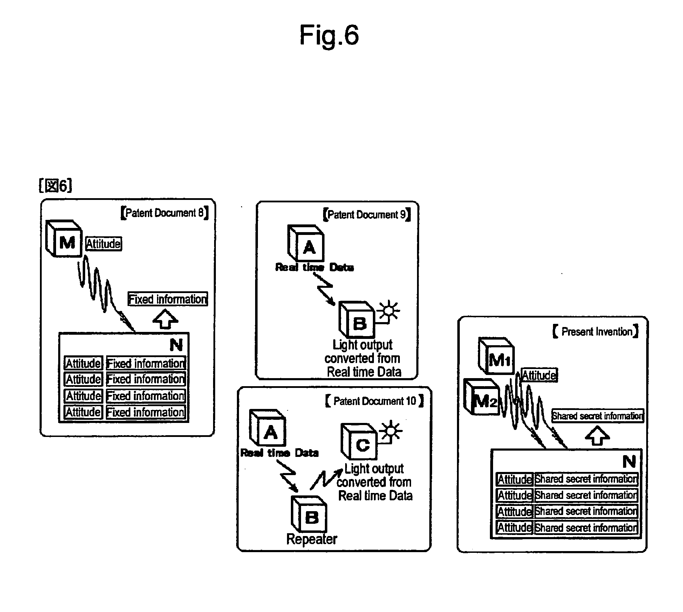

[Fig. 6] Comparative explanatory views of the apparatus and devices of Patent Documents 8, 9, and 10 and the device of the present invention.
[Fig. 7] An explanatory view of a three-axis attitude sensor and output thereof: for the three-axis attitude sensor P, deflection detecting axes of respectiveA-a, B-b, andC-c sensors composedof piezoelectric elements are disposed and fixed in directions not parallel to each other.
[Fig. 8] A view for explaining that a static attitude of a truncated octahedron (Mto) can be distinguished by an output of a three-axis attitude sensor (Pto) fixedly disposed inside.
[Fig. 9] A block diagram of an apparatus for communicating fixed information related to an attitude of an object.
[Fig. 10] A flowchart of a process of n6 (process to output information related to an attitude of an object M).
[Fig. 11] A flowchart of a process to store arbitrary information in n4 in a manner related to an attitude of an object M.
[Fig. 12] An explanatory view of an embodiment of application relating to "OUT, " "MEETING, " "ATTENDANCE, " "RETURNED HOME, " and other information and voluntary notification of whereabouts or service management of an office worker depending on an attitude of a partial surface of a rectangular parallelepiped (hexahedron) Mr.
[Fig. 13] An explanatory view of n4 (a storage means having n4a, n4b, and n4c).
[Fig. 14] A block diagram of an apparatus for communicating fixed information related to an attitude of an object.
[Fig. 15] Explanatory views of still another configuration (n transmitting sources exist and respectively transmit attitude/motion data to individual receiving destination stations Nn) of the second embodiment (transmittable/receivable) of the present invention.

### Description of Reference Numerals

10: Output of an A-a axis deflection detecting element when the A-a axis is in a vertical attitude of "A is above"
11: Output of an A-a axis deflection detecting element when the A-a axis is in a horizontal attitude
12: Output of an A-a axis deflection detecting element when the A-a axis is in a vertical attitude of "a is above"
20: Output of a B-b axis deflection detecting element when the B-b axis is in a vertical attitude of "B is above"
21: Output of a B-b axis deflection detecting element when the B-b axis is in a horizontal attitude
22: Output of a B-b axis deflection detecting element when the B-b axis is in a vertical attitude of "b is above"
30: Output of a C-c axis deflection detecting element when the C-c axis is in a vertical attitude of "C is above"
31: Output of a C-c axis deflection detecting element when the C-c axis is in a horizontal attitude
32: Output of a C-c axis deflection detecting element when the C-c axis is in a vertical attitude of "c is above"
   m1: Means that remotely transmits an attitude sensor output
   m2: Modulating means that modulates an attitude sensor output to radio wave signals (loaded with that information)
   m3: Radio wave signal transmitting antenna
   m10: Means that outputs received information (such as a liquid crystal display, a lamp (light-emitting diode), a speaker, or the like)
      or an actuator driven based on received information
   m11: Means that receives signals
   m12: Means that demodulates received radio waves to obtain signals loaded on the radio waves
   m13: Radio wave receiving antenna
   M: Object M that takes a plurality of static attitudes
   M0: Object M provided with receiving means
   M1: First object M
   M2: Second object M
   M3: Third object M
   Mn: Nth object M
   Mr: Example of the object M, which is a rectangular parallel piped (hexahedron)
   Mto: Example of the object M, which is a truncated octahedron
   N: Station isolated from the object M
   N0: Arbitrary information transmitting destination that receives secret information from N or Nn
   N1: First station N provided with transmitting means
   N2: Second station N provided with transmitting means
   N3: Third station N provided with transmitting means
   Nn: Nth station N provided with transmitting means
   n1: Receiving means that receives attitude sensor signals
   n2: Radio wave receiving antenna
   n3: Means that demodulates received radio waves to obtain signals corresponding to an attitude sensor output loaded on the radio waves n4: Storage means having n4a, n4b, and n4c
   n4a: First storage means that stores a secret key resulting from an attitude/acceleration sensor output of the object M
   n4b: Second storage means in which secret information is stored in a manner corresponding to the memory of the first storage means using attitude/motion of the object M as a secret key
   n4c: Means that stores correspondence between a memory location of the output range data of n4a and a memory location of the information of n4b
   n5: Means that writes and corrects memory information of n4 as necessary n6: Means that judges whether the signals of n3 match a plurality of secret key data conditions of n4a and cites, if matching, the secret information of n4b stored in a manner corresponding to the memory of n4a
   n7: Display means such as a liquid crystal display monitor that outputs the secret information of n4b cited by n6
   n10 : Means that obtains secondary information based on secret information using an attitude/motion of the object M as a secret key
   n11: Means that remotely transmits secondary information
   n12: Radio wave signal transmitting antenna
   n13: Modulating means that modulates electric signals of secondary information to radio wave signals (loaded with that information)
   P: Three-axis attitude sensor (one-axis piezoelectric sensors A-a, B-b, and C-c are fixed with their axes orthogonal to each other)
   Pto: Three-axis attitude sensor (P) fixedly disposed inside Mto
   Sr1: Side surface (partial surface that can be distinguished visually from other surfaces) of a rectangular parallelepiped (hexahedron) whose surface is inscribed with "ATTENDED"
   Sr2: Side surface (partial surface that can be distinguished visually from other surfaces) of a rectangular parallelepiped (hexahedron) whose surface is inscribed with "RETURN HOME"
   X1: Output where Mto is motionless with its X-surface (unillustrated) down and an A-a sensor of Mtx is in a tilted attitude of "A is above"
   X2: Output where Mto is motionless with its X-surface (unillustrated) down and a B-b sensor of Mtx is in a tilted attitude of "B is above"
   X3: Output where Mto is motionless with its X-surface (unillustrated) down and a C-c sensor of Mtx is in a tilted attitude of "c is above"
   Y1: Output where Mto is motionless with its Y-surface (unillustrated) down and an A-a sensor of Mtx is in a tilted attitude of "A is above"
   Y2: Output where Mto is motionless with its Y-surface (unillustrated) down and a B-b sensor of Mtx is in a specific tilted attitude of "B is above"
   Y3: Output where Mto is motionless with its Y-surface (unillustrated) down and a C-c sensor of Mtx is in a specific tilted attitude of "c is above"
   Z1: Output where Mto is motionless with its Z-surface (unillustrated) down and an A-a sensor of Mtx is in a specific tilted attitude of "a is above"
   Z2: Output where Mto is motionless with its Z-surface (unillustrated) down and a B-b sensor of Mtx is in a specific tilted attitude of "b is above"
   Z3: Output where Mto is motionless with its Z-surface (unillustrated) down and a C-c sensor of Mtx is in a specific tilted attitude of "C is above"

### Best Mode for Carrying Out the Invention

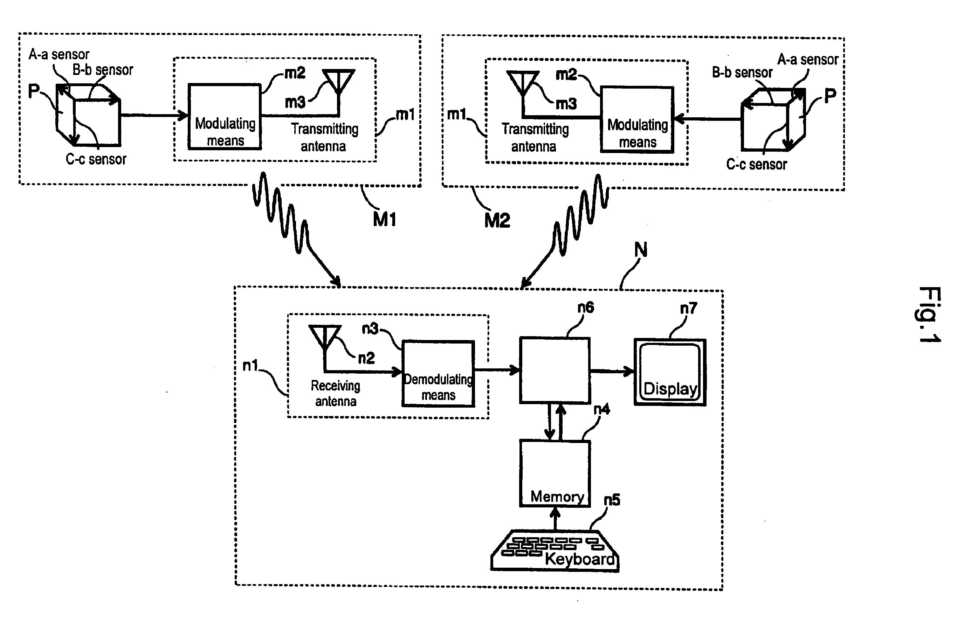

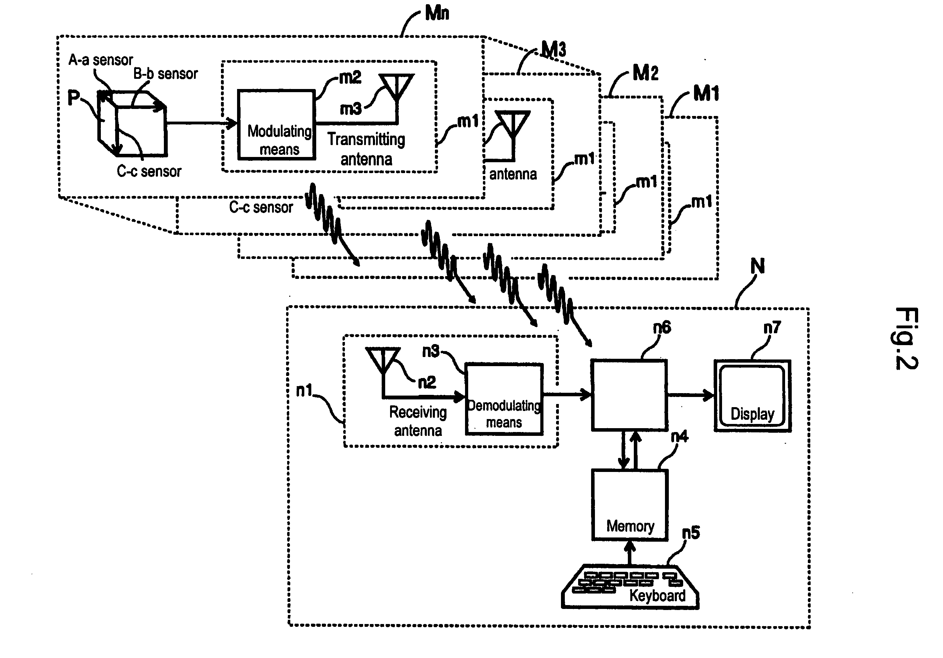

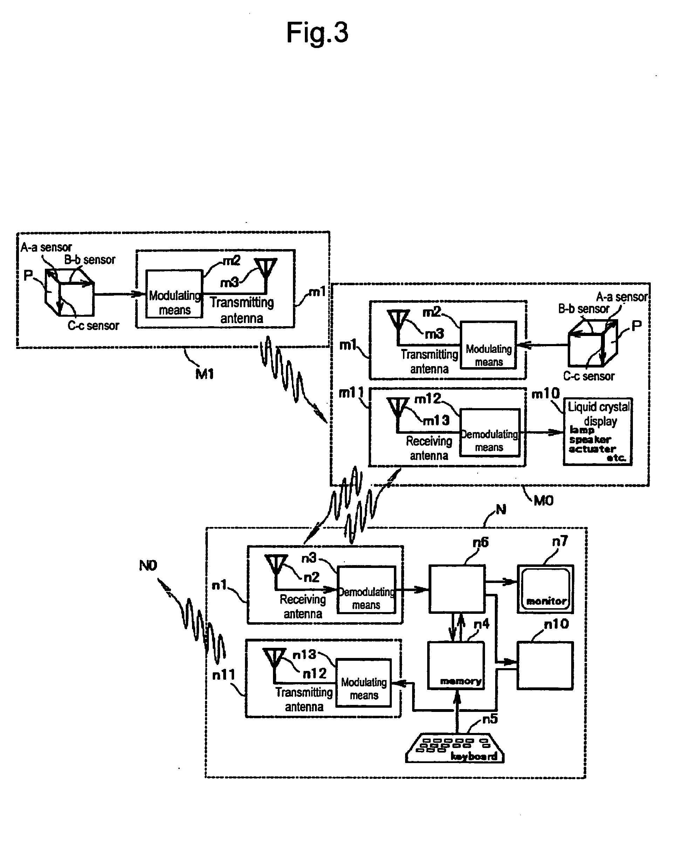

Modes (device configurations) for carrying out the present invention will be illustrated and explained by Fig. 1 to Fig. 4 and Fig. 15. Fig. 1 is an explanatory views of a device configuration of a first embodiment (reception-only mode) of the present invention. Fig. 1 is an example where two transmitting sources: obj ect M1 and obj ect M2 exist. Fig. 2 shows another configuration of the first embodiment(reception-only mode) of the present invention. Fig. 2 is an example where three or more transmitting sources: objects M1, M2 ..., Mn exist. Fig. 3 is an explanatory view of a device configuration of a second embodiment (having a transmittable/receivable M0) of the present invention. M1 of Fig. 1 has a configuration paired with a parallel functional unit of M2, whereas M1 of Fig. 3 has a configuration paired with a superior functional unit (master unit) of M0. M1 of Fig. 3 is a slave unit to the master M0 and has only a transmitting function. M0 is an object M provided with a transmitting means, and summarizes attitude/motion data of M0 itself and attitude/motion data of M1 received from the slave M1 and transmits the same to a station N. Furthermore, the station N of Fig. 3 is more sophisticated than a station N of Fig. 2 and has a means n11 that remotely transmits secondary information. Here, although the second information will be explained later, it is even sufficient to simply transmit a secret canceling signal. n11 transmits secondary information that one condition for canceling secreting/encoding has been cleared to a receiving destination NO where actual secret information has been protected by a further advanced secreting/encoding.

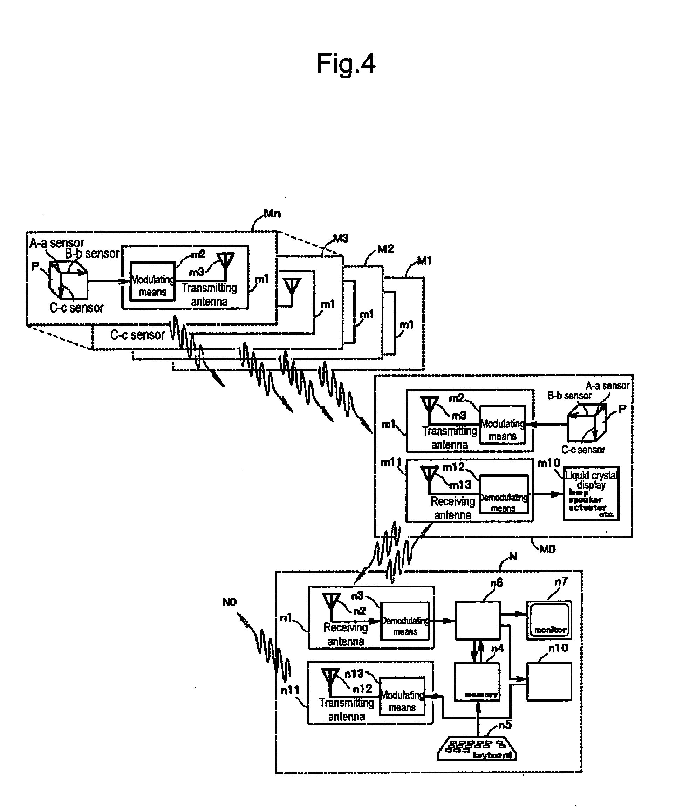

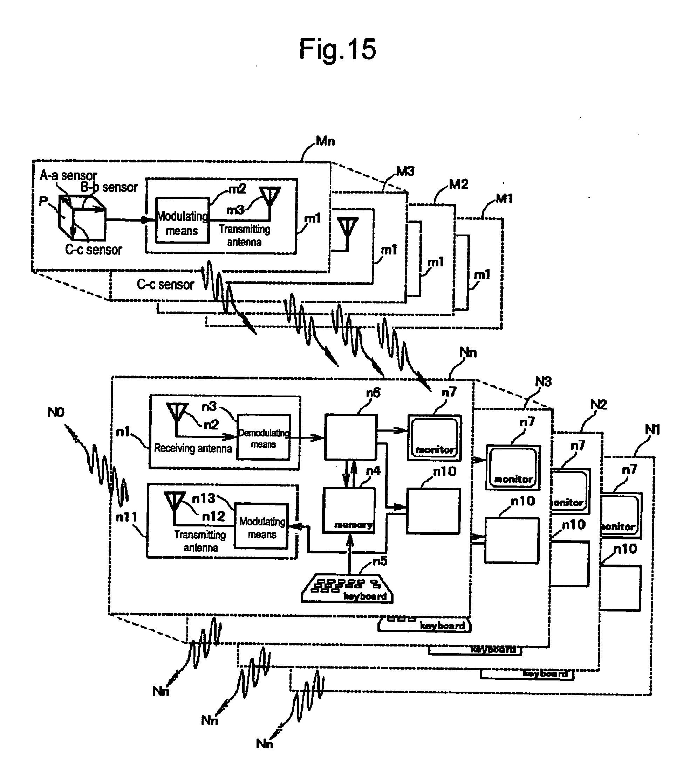

Fig. 4 shows a configuration of the second embodiment of the present invention where a plurality of slaves to the master M0 of Fig. 3 exist, and the slaves are three or more transmitting sources: objects M1, M2, ..., Mn. Fig. 15 shows still another configuration (n transmitting sources exist and respectively transmit attitude/motion data to individual receiving destination stations Nn) of the first embodiment (reception-only mode) of the present invention of Fig. 2. In Fig. 15 as well, a station Nn is more sophisticated than the stations N of Fig. 1 and Fig. 2 and has a means n11 that remotely transmits secondary information. The station Nn is a master to other slave stations N1, N2, and N3, and the master station Nn receives and summarizes secondary information of the slave stations N1, N2, andN3, andNn transmits secondary information that one condition for canceling secreting/encoding has been cleared to a receiving destination N0 where actual secret information has been protected by a further advanced secreting/encoding. Although the configuration of Fig. 15 has a large amount of hardware, the configuration is not so difficult since it is sufficient to dispose a plurality of sets of M and N and load software for the above-described summarization on Nn being a master station.

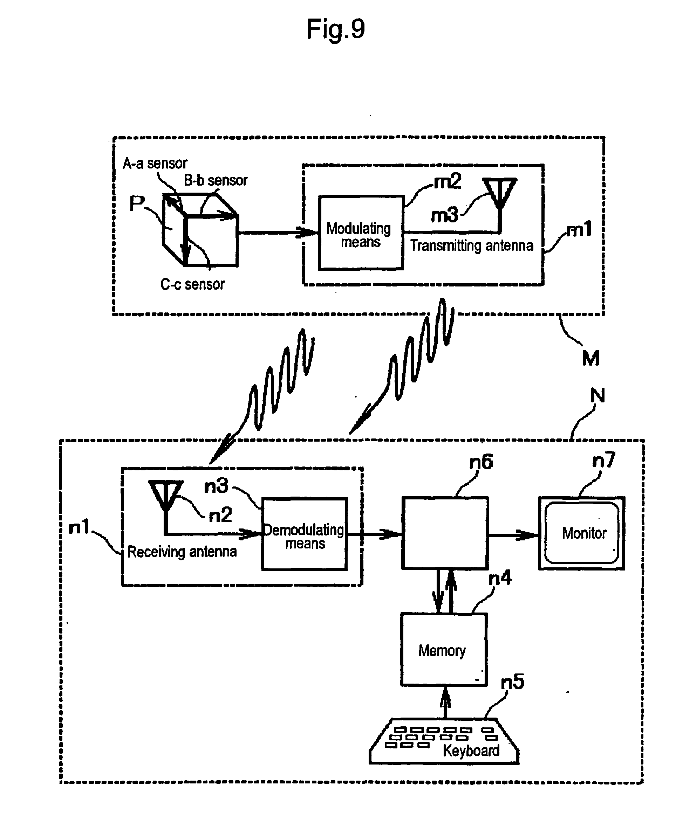

Basic configurations of the object M and the station N are the same as those in Patent Document 8. Hereinafter, by use of a description in Patent Document 8, explanation will be given of an electronic tag with a sensor of the present invention, that is, the object M provided with an attitude (or acceleration) sensor and a means that remotely transmits output of said attitude (or acceleration) sensor and the station N. A description of fixed information in the following is used synonymously for secret information in the present invention. The apparatus of Patent Document 8 is an apparatus that outputs fixed information related to an attitude of an object M to take a plurality of attitudes at a station N isolated from the object M, and the object M is provided with a (three-axis) attitude sensor P, a modulating means m2 that modulates a (three-axis) attitude sensor output to radio wave signals, and a radio wave transmitting means m3 having an antenna, and the isolated station N is provided with a receiving means n2 having an antenna that remotely receives the radio waves, a means n3 that demodulates received radio waves, and a storage means n4 having n4a, n4b, and n4c (see Fig. 9) . Here, reference symbol n4a denotes a first storage means that stores a range data of an attitude sensor output when the object M is static, reference symbol n4b denotes a second storage means in which fixed information related to an attitude of the object M is stored in a manner corresponding to memory of the first storage means, and reference symbol n4c denotes a means that stores correspondence between memory locations of the output range data of n4a and memory locations of the information of n4b as addresses, pointers, or the like.

Furthermore, the isolated station N is provided with a following means n6. That is, provided is a means that judges as to whether received signals of the receiving means n2 are included in one range of the output range data stored in the first storage means n4a and cites, when included, the fixed information in the second storage means n4b stored in a manner corresponding to the output range data of the first storage means and a means n7 that outputs (displays) the cited fixed information to a liquid crystal display monitor or the like.

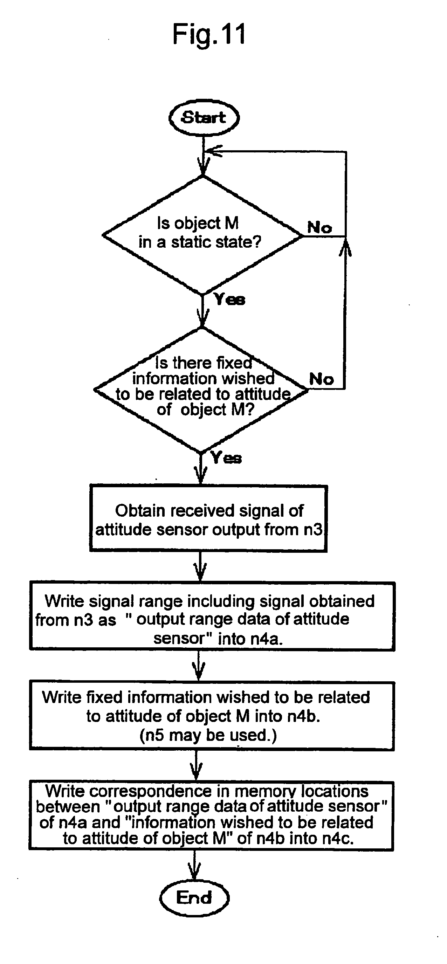

Here, memory writing of the storage means n4 will be described with a flowchart of Fig. 11. First, suppose that `Is object M in a static state?' and 'Is there fixed information wished to be connected with attitude of object M?*'* are both Yes. In this condition, "Obtain received signal of attitude sensor output from n3' at the isolated station N.

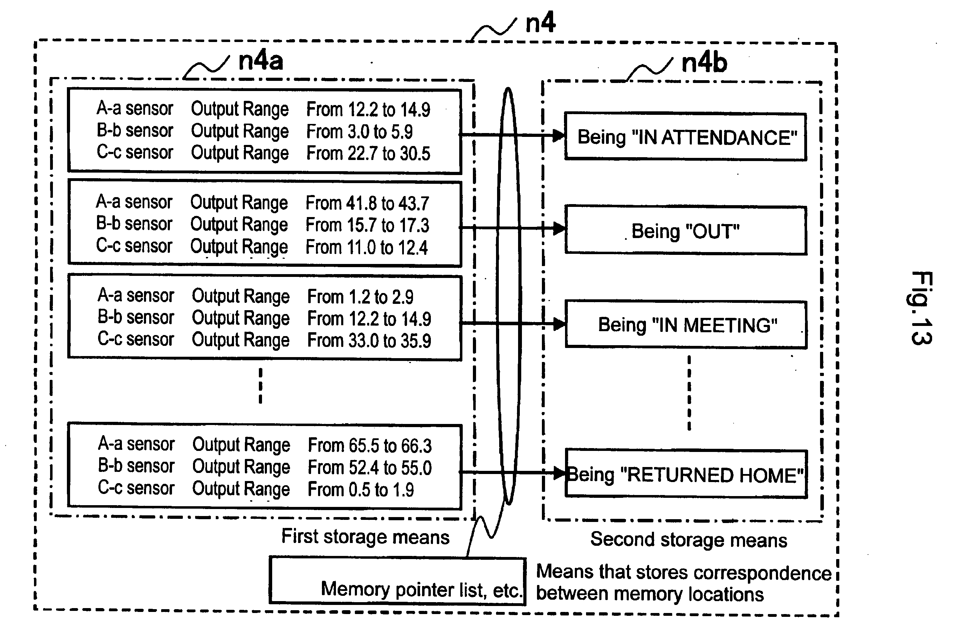

The received signal is an attitude sensor signal corresponding to a static state of the object M. Then, in order to ease a judgment to be described later, a range with appropriate margins before and after the signal value is provided as "attitude sensor output range data," and 'Write signal range including signal obtained from n3 as "attitude sensor output range data" into n4a." Simultaneously therewith, 'Write fixed information wished to be related to attitude of object M into n4b.' Furthermore, 'Write correspondence in memory locations between "attitude sensor output range data" of n4a and "information wished to be related to attitude of object M" of n4b into n4c,' thus three writing operations are carried out. For these writing operations, a means n5 that carries out writing and correction is used, if necessary. States of the storage means n4 (storage means having n4a, n4b, and n4c) for which writing has been completed are exemplified in Fig. 13.

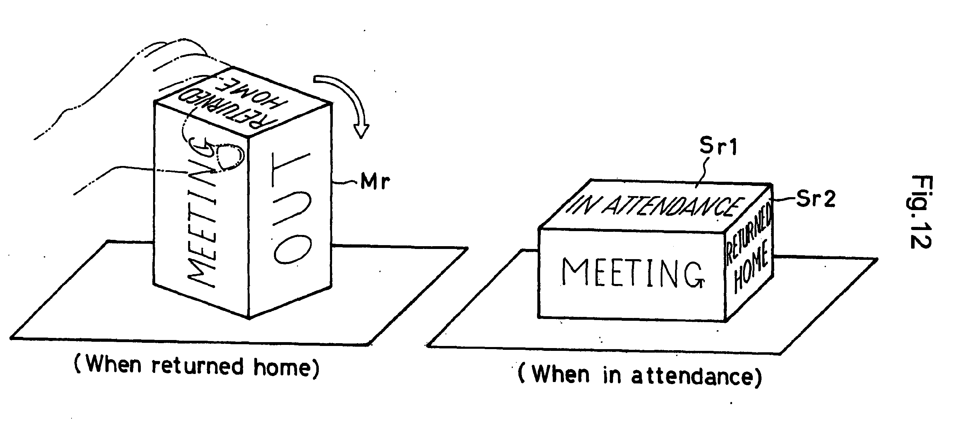

For the sake of simplification, examples and explanations in Fig. 13 have been shown in terms of a case where the fixed information related to the attitude of anobj ectMr in Fig. 12 is "ATTENDANCE," "OUT," "MEETING, " and "RETURNED HOME." In the present invention, the fixed information corresponds to secret information, andn4a stores secret keydata resulting from attitude/acceleration sensor outputs of a plurality of objects M. This is, for example, range data of attitude sensor output in a specific attitude of M1 and range data of attitude sensor output in a specific attitude of M2. n4b stores secret information in a manner corresponding to memory of the first storage means. n6 is a means that judges whether signals of n3 match a plurality of secret key data conditions and cites, if matching, the secret information of n4b stored in a manner corresponding to the memory of n4a.

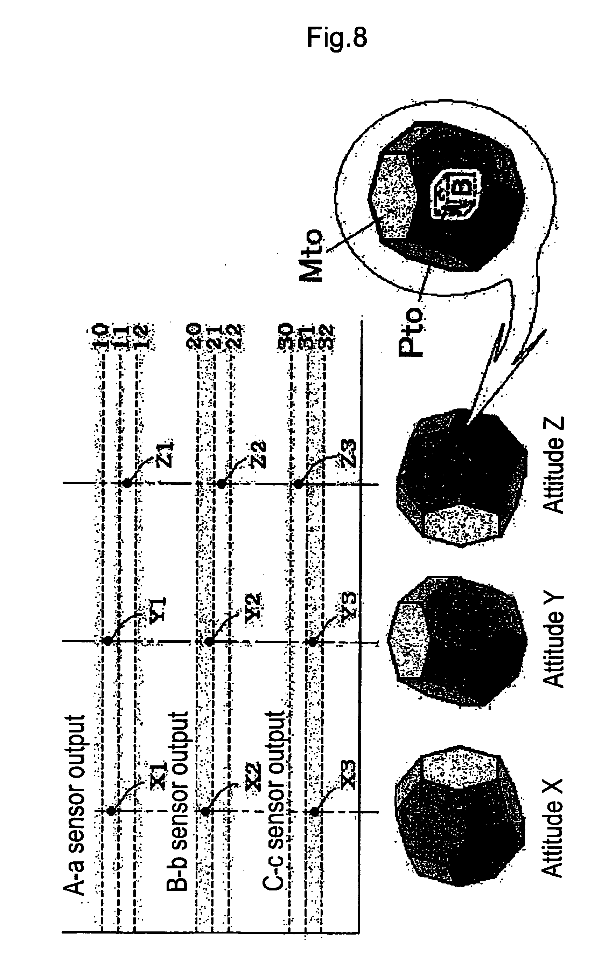

It is possible to dispose the electronic tag with an attitude sensor of the present invention on a structural component having an arbitrary shape. As a simple example of disposition, Fig. 8 shows an example where the object M is a polyhedron Mto called a truncated octahedron, where a three-axis attitude sensor (Pto) is fixedly disposed inside Mto. In response to an attitude X, an attitude Y, and an attitude Z, different attitude outputs (X1, X2, X3), (Y1, Y2, Y3), and (Z1, Z2, Z3) are outputted from the internal attitude sensor Pto, and these are transmitted through m2 and m3 (illustration is omitted).

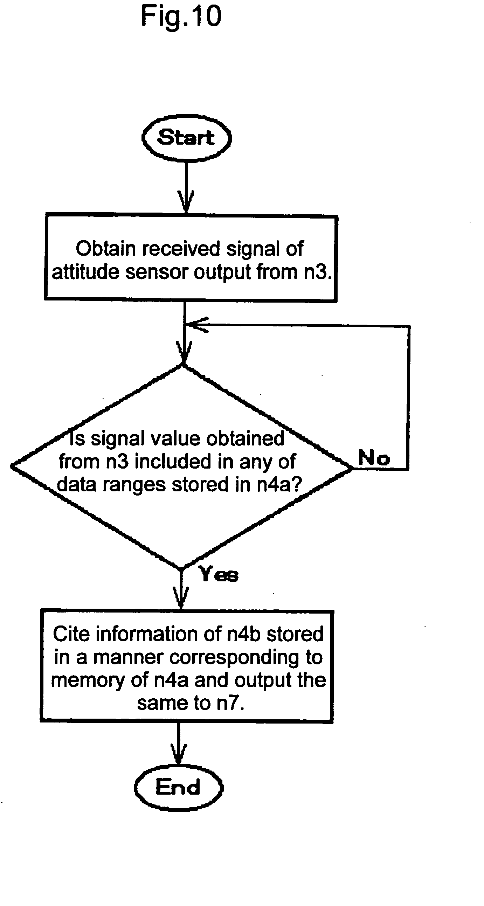

After carrying out the memory writing operations in the flow of Fig. 11, when the object M has became a specific attitude related to fixed information in the flow of Fig. 11, the fixed information is outputted and displayed at the isolated station N. To explain a process (process of n6) at the isolated station N by use of a flowchart of Fig. 10, first, a process 'Obtain received signal from n3' is carried out, next, 'Is value of received signal from n3 is included in data range stored in n4a?' is judged, and if this turns out to be Yes, 'Cite information of n4b stored in a manner corresponding to memory of n4a and output the same to n7.' The flowchart of Fig. 10 has also been shown for the sake of simplification in terms of a case where the fixed information related to the attitude of an object Mr is "ATTENDANCE," "OUT," "MEETING," and "RETURNED HOME." In the present invention, the fixed information corresponds to secret information, 'Does value of received signal from n3 match a plurality of secret key data conditions stored in n4a?' is judged, and if this turns out to be Yes, 'Cite information of n4b stored in a manner corresponding to memory of n4a and output the same to n7.'

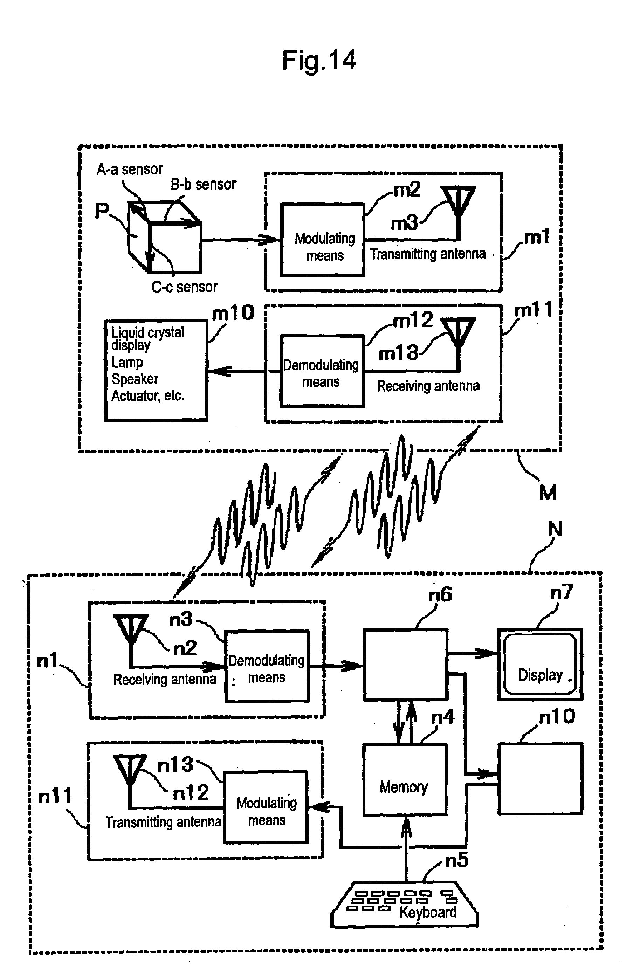

The above mode has been of a unidirectional communication from the object M to the station N, however, a mode of a bidirectional communication between the object M and station N is also effective. A configuration thereof is the so-far explained configuration of a unidirectional communication added further with the following constituent elements (see Fig. 14).

That is (Claim 2 of Patent Document 8), the configuration further includes, in the isolated station N, a means n10 that obtains secondary information based on secret information cited by the process of n6 and a means n11 that remotely transmits the secondary information, and in the object M, a receiving means m11 that receives a remotely transmitted signal of the secondary information and an output means m10 for the secondary information. The means n10 that obtains secondary information is, for example, "the third storage means that stores an expected signal reception pattern in advance and the means that judges and outputs a difference (secondary information) between the expected signal reception pattern and an actual reception pattern" described above. Claim 3 of the present invention sets forth the mode of a bidirectional communication hereindescribed.

The secondary information includes, for example, a confirmation signal indicating that a secret information sharer has grasped an output of secret information and confirmed the contents, an urging signal with which one of the secret information sharers urges the other to grasp an output of secret information and confirm the contents, and an opinion signal with which one of the secret information sharers agrees/disagrees with the other about the contents of secret information or approves/disapproves the contents of secret.

As a special example, there is a case where a (nonhuman) animal and its owner share a secret. In that case, the animal has an attitude/motion secret key. For example, an application to opening and closing of an automatic door for a pet cat will be explained. A signal on opening and closing of the automatic door is set as "secret information, " and an object M is mounted on a collar or the like of the pet cat. The owner also carries an object M. By attitudes/motions of these two obj ects, such as by inverting the object M of the owner, it is made so that "the automatic door is openable and closable," and the signal on opening and closing of the door being a "secret key" is sent to open and close the automatic door only when the family cat approaches the automatic door and the object M on the collar of the family cat detects a specific attitude/motion. As secondary information in this case, environmental information such as temperature/humidity of a place to which the door has been opened and closed can be exemplified.

Similarly, as a special example, there is an example of a racehorse and its jockey. An object M is mounted on a saddle or the like of the racehorse. The jockey also carries an object M fixed to a whip. A signal on opening and closing of an automatic door at the entrance of a stable is set as "secret information," and the signal on opening and closing the automatic door at the entrance of the stable being "secret information" is sent to open and close the automatic door when the jockey makes his whip take a specific attitude/motion and the racehorse also takes a specific attitude/motion together with the saddle. As secondary information in this case as well, environmental information such as temperature/humidity of a place to which the door has been opened and closed can be exemplified.

Similarly, as a special example, there is an example of a private car and its driver. An object M is mounted on a car body or the like of the private car. The driver also carries an object M fixed to a car key. A signal on opening and closing of an automatic door at the entrance of a parking lot is set as "secret information," and the object M on the car body detects attitudes/motions of the driver and private car and transmits the signal on opening and closing of the automatic door at the entrance of the parking lot being "secret information" to open and close the automatic door when the driver makes his/her car key take a specific attitude/motion and the private car also moves at a specific acceleration such as, for example, stopping shortly after accelerating. For the private car and its driver, generally, objects M disposed on both of a manipulator and an actuator manipulated by said manipulator are used, and therefore, a working mode wherein no human is involved may be employed.

As the secret information, gene information common to family members/relatives can also be mentioned as an example. Gene information on a disease causing a specific motion that usually does not need to be recognized or the like is preferable, and family members are made to carry objects M, and a motion of the object M as being a "secret key" is set as a specific motion of a disease. Where one of the family members has developed the disease and the specific motion has been detected, the gene information on the disease is outputted only when another family member is present at a nearby place where he/she can provide care and carries the object M.

Similarly, as the secret information, knockout gene information on a gene knockout animal can also be mentioned as an example. It is provided that the knockout gene information needs to be concealed, and an object M is mounted on the gene knockout animal, and a "secret key" of the object M is set as a specific motion caused by a gene knockout. An administrator/researcher of the gene knockout animal also carries an object M, and an appropriate secret key is set as an unique attitude/motion of the administrator/researcher. Where the administrator/researcher has been observing the gene knockout animal in the vicinity thereof in the unique attitude/motion while carrying the object M with the secret key on, furthermore, only when the specific motion caused by a gene knockout occurs at the gene knockout animal, the knockout gene information is outputted.

## Claims

1. A device for storing secret information using an attitude of an object M as a secret key, said device storing secret information in a station N isolated from the object M, wherein
two or more objects M each comprise an attitude sensor and a means that remotely transmits output of the attitude sensor, and
the isolated station N comprises:
a receiving means for a remotely transmitted signal of the attitude sensor output;
a first storage means that stores a data set of two or more combinations of output range data of the attitude sensor of the two or more objects M as a secret key;
a second storage means that stores secret information in a manner corresponding to the secret key; and
a means that outputs the secret information of the second storage means stored in a manner corresponding to the secret key and/or a means that transmits the secret information of the second storage means stored in a manner corresponding to the secret key when a combination of attitude sensor output data received by the receiving means from the two or more objects M matches the secret key.

2. A device for storing secret information using a motion of an object M as a secret key, said device storing secret information in a station N isolated from the object M, wherein
two or more objects M each comprise an acceleration sensor and a means that remotely transmits output of the acceleration sensor, and
the isolated station N comprises:
a receiving means for a remotely transmitted signal of the acceleration sensor output;
a first storage means that stores a data set of two or more combinations of series of output pattern data of the acceleration sensor of the two or more objects M as a secret key;
a second storage means that stores secret information in a manner corresponding to the secret key; and
a means that outputs the secret information of the second storage means stored in a manner corresponding to the secret key and/or a means that transmits the secret information of the second storage means stored in a manner corresponding to the secret key when a combination of series of the output pattern data of the acceleration sensor received by the receiving means from the two or more objects M matches the secret key.

3. A device for storing secret information using an attitude or motion of an object M that takes a plurality of attitudes as a secret key, said device bidirectionally communicating the secret information and secondary information obtained from the secret information, wherein
two or more objects M each comprise an attitude or acceleration sensor and a means that remotely transmits output of the attitude or acceleration sensor,
the isolated station N comprises:
a receiving means for a remotely transmitted signal of the attitude or acceleration sensor output;
a first storage means that stores a data set of two or more combinations of the output range data of the attitude sensor of the two or more objects M or a data set of two or more combinations of series of the output pattern data of the acceleration sensor of the two or more objects M as a secret key;
a second storage means that stores secret information in a manner corresponding to the secret key; and
a means that outputs the secret information of the second storage means stored in a manner corresponding to the secret key and/or a means that transmits the secret information of the second storage means stored in a manner corresponding to the secret key when a combination of attitude sensor output data received by the receiving means from the two or more objects M matches the secret key or when a combination of series of the output pattern data of the acceleration sensor received by the receiving means from the two or more objects M matches the secret key,
the isolated station N further comprises a means that obtains secondary information, when the isolated station N outputs and/or transmits secret information upon matching of the secret key, based on the secret information and a means that remotely transmits the secondary information, and
the object M further comprises a receiving means that receives a remotely transmitted signal of the secondary information and an output means for the secondary information.

4. The device for storing secret information using an attitude or motion of an object M as a secret key according to Claim 1 to Claim 3, wherein
the secret information is also related to a character described on a surface, a graphic drawn on the surface, or a color applied to the surface that can be visually perceived at the sight of the surface of the object M.

5. The device for storing secret information using an attitude or motion of an object M as a secret key according to Claim 1 to Claim 3, wherein
the secret information is also related to a surface unevenness or a sense of touch of a surface that can be tactually perceived by touching the surface of the object M.

6. The device for storing secret information using an attitude or motion of an object M as a secret key according to Claim 1 to Claim 3, wherein
the object M is a solid body a part of whose surface can be visually distinguished as a partial surface from the other part of the surface, and
one of the attitudes of the object M is an attitude of the object M statically placed with the partial surface located at an uppermost portion of the solid body or a lowermost portion of the solid body,
one of the motions of the object M is a series of motions to change the partial surface from the attitude of the object M statically placed with the partial surface located at an uppermost portion of the solid body or a lowermost portion of the solid body into another attitude, or
one of the motions of the object M is a series of motions to change the partial surface from an attitude different from the attitude of the object M not statically placed with the partial surface located at an uppermost portion of the solid body or a lowermost portion of the solid body into the attitude of the object M statically placed with the partial surface located at an uppermost portion of the solid body or a lowermost portion of the solid body.

7. The device for storing secret information using an attitude or motion of an object M as a secret key according to Claim 1 to Claim 3, wherein
the secret information is shared by two or more secret information sharers, the secret information sharers each possessing a different object M.
